# EUROPÄISCHE PATENTANMELDUNG

(11) **EP 1 319 791 A2**
(43) Veröffentlichungstag der Anmeldung: **18.06.2003**
(21) Anmeldenummer: 02028290.1
(22) Anmeldetag: 17.12.2002
(51) Int. Cl.: E06B 3/82, E06B 7/23, H02B 1/38

(54) **Wandprofil, Schaltschranktür und Verfahren zum Herstellen eines Bauteils mit einem Randprofil**

(30) Priorität: 17.12.2001 DE 10163472; 10.04.2002 DE 10215728
(71) Anmelder: Beisswenger, Friedrich, 74523 Schwäbisch Hall (DE)
(72) Erfinder: Beisswenger, Friedrich, 74523 Schwäbisch Hall (DE)
(74) Vertreter: Brisch, Georg

(57) **Zusammenfassung**

Die Erfindung betrifft ein Randprofil eines Bauteils aus einem biegsamen Werkstoff mit einem länglichen Aufnahmeraum, der von einem länglichen Aufnahmekörper (10) gebildet wird und dazu dient, eine längliche Dichtung (22) so aufzunehmen, dass ein Teil der Dichtung in Form einer Dichtlippe (26) aus dem Aufnahmeraum herausragt.

Um die Herstellung zu vereinfachen, ist der Aufnahmekörper (10) einstückig mit dem Bauteil ausgebildet.

## Beschreibung

Die Erfindung betrifft ein Randprofil eines Bauteils, insbesondere einer Tür für einen Schaltschrank, aus einem biegsamen Werkstoff, insbesondere aus Blech, mit einem länglichen Aufnahmeraum, der von einem länglichen Aufnahmekörper gebildet wird und dazu dient, eine längliche Dichtung so aufzunehmen, dass ein Teil der Dichtung in Form einer Dichtlippe aus dem Aufnahmeraum herausragt. Die Erfindung betrifft auch ein Verfahren zum Herstellen eines Bauteils mit einem solchen Randprofil.

Es sind Randprofile bekannt, bei denen der Aufnahmekörper von einem separaten Bauteil gebildet wird, das durch Punktschweißen an dem Randprofil befestigt wird. Das Anbringen des Aufnahmekörpers an dem Randprofil macht einen zusätzlichen Arbeitsschritt erforderlich.

Aufgabe der Erfindung ist es, die Herstellung des Randprofils zu vereinfachen.

Die Aufgabe ist bei einem Randprofil eines Bauteils, insbesondere einer Tür für einen Schaltschrank, aus einem biegsamen Werkstoff, insbesondere aus Blech, mit einem länglichen Aufnahmeraum, der von einem länglichen Aufnahmekörper gebildet wird und dazu dient, eine längliche Dichtung so aufzunehmen, dass ein Teil der Dichtung in Form einer Dichtlippe aus dem Aufnahmeraum herausragt, dadurch gelöst, dass der Aufnahmekörper einstückig mit dem Bauteil ausgebildet ist. Dadurch kann das aus dem Stand der Technik bekannte Anschweißen des Aufnahmekörpers an das Randprofil entfallen. Die in den Aufnahmekörper eingesetzte Dichtlippe kommt beispielsweise an dem Rahmen eines Schaltschranks zur Anlage, um die Schnittstelle zwischen einer mit dem erfindungsgemäßen Randprofil ausgestatteten Schaltschranktür und dem Schaltschrank abzudichten.

Ein bevorzugtes Ausführungsbeispiel des Randprofils ist dadurch gekennzeichnet, dass das Randprofil von einer Grundfläche, insbesondere von einer Türflügelfläche ausgeht, die über mehrere Biegekanten mit dem Aufnahmekörper für die Dichtung verbunden ist. Die Ausbildung der Verbindung zwischen Aufnahmekörper und Randprofil als Biegekante hat den Vorteil, dass der Aufnahmekörper in einem Arbeitsgang mit dem Erzeugen des Randprofils hergestellt wird.

Ein weiteres bevorzugtes Ausführungsbeispiel des Randprofils ist dadurch gekennzeichnet, dass das Randprofil ausgehend von der Grundfläche eine erste Biegekante aufweist, von der ein erstes längliches Rahmenteil ausgeht, das im Wesentlichen rechtwinklig zu der Grundfläche angeordnet ist. Das erste längliche Rahmenteil bildet die seitliche Begrenzung des Bauteils und verleiht dem Bauteil Stabilität.

Ein weiteres bevorzugtes Ausführungsbeispiel des Randprofils ist dadurch gekennzeichnet, dass an dem ersten länglichen Rahmenteil eine zweite Biegekante ausgebildet ist, von der ein zweites längliches Rahmenteil ausgeht, das zu der Grundfläche hin gebogen ist. Das zweite längliche Rahmenteil ist nach innen zu der Grundfläche des Bauteils hin gebogen. Dadurch wird erreicht, dass das Bauteil nach außen hin einen sauberen Abschluss aufweist.

Ein weiteres bevorzugtes Ausführungsbeispiel des Randprofils ist dadurch gekennzeichnet, dass der Winkel zwischen dem ersten und dem zweiten länglichen Rahmenteil mehr als 90° beträgt. Bei einem bevorzugten Ausführungsbeispiel beträgt der Winkel etwa 140°.

Ein weiteres bevorzugtes Ausführungsbeispiel des Randprofils ist dadurch gekennzeichnet, dass das zweite längliche Rahmenteil über eine dritte Biegekante mit dem Aufnahmekörper verbunden ist. Über die dritte Biegekante ist der Aufnahmekörper einstückig mit dem Randprofil verbunden, also in das Randprofil integriert.

Ein weiteres bevorzugtes Ausführungsbeispiel ist dadurch gekennzeichnet, dass die dritte Biegekante zwischen dem zweiten länglichen Rahmenteil und dem Aufnahmekörper für die Dichtung perforiert ausgebildet ist. Bei im Rahmen der vorliegenden Erfindung durchgeführten Untersuchungen hat sich herausgestellt, dass das Erzeugen des Randprofils mit integriertem Aufnahmekörper nicht ohne weiteres in einem Arbeitsgang funktioniert. Durch die Anbringung der Perforation wird das Abkanten beziehungsweise Biegen im Bereich der dritten Biegekante erheblich vereinfacht.

Ein weiteres bevorzugtes Ausführungsbeispiel des Randprofils ist dadurch gekennzeichnet, dass der Aufnahmekörper im Querschnitt betrachtet, eine Basis aufweist, von der ein erster und ein zweiter Schenkel ausgehen, zwischen denen die Dichtung angeordnet, insbesondere eingeklemmt ist. Der Querschnitt der Dichtung ist an den Querschnitt des Aufnahmekörpers angepasst. Die Dichtlippe ragt aus dem Aufnahmekörper heraus und ist vorzugsweise spitz zulaufend ausgebildet.

Ein weiteres bevorzugtes Ausführungsbeispiel des Randprofils ist dadurch gekennzeichnet, dass die beiden Schenkel zueinander geneigt angeordnet sind und dass zwischen den Schenkeln und der Basis jeweils ein Winkel von weniger als 90°, insbesondere im Wesentlichen 45°, eingeschlossen ist. Dadurch wird eine sichere Aufnahme der Dichtung in dem Aufnahmekörper erreicht. Die Dichtung kann beispielsweise in Längsrichtung in den fertigen Aufnahmekorper eingeschoben werden. Es ist jedoch auch möglich, die Dichtung vor dem Erzeugen des Aufnahmekörpers einzusetzen und praktisch die Dichtung mit dem Aufnahmekörper zu umgreifen. Die schräge Anordnung der Schenkel sorgt dafür, dass die Dichtung von den beiden Schenkeln sicher umgriffen wird.

Ein weiteres bevorzugtes Ausführungsbeispiel des Randprofils ist dadurch gekennzeichnet, dass der erste Schenkel des Aufnahmekörpers über die dritte Biegekante mit dem zweiten länglichen Rahmenteil einstückig verbunden ist, und dass der dazwischen eingeschlossene Winkel etwa 0° beträgt. Der erste Schenkel des Aufnahmekörpers liegt also an dem zweiten läng-lichen Rahmenteil an. Die extreme Biegung zwischen dem ersten Schenkel des Aufnahmekörpers und dem zweiten länglichen Rahmenteil wird durch die Perforation ermöglicht. Durch die Perforation wird das Material im Bereich der Biegekante punktuell geschwächt.

Ein weiteres bevorzugtes Ausführungsbeispiel des Randprofils ist dadurch gekennzeichnet, dass zwischen dem ersten Schenkel und der Basis eine vierte Biegekante ausgebildet ist. Die vierte Biegekante kommt mit ihrer Außenseite an dem zweiten länglichen Rahmenteil zur Anlage.

Ein weiteres bevorzugtes Ausführungsbeispiel des Randprofils ist dadurch gekennzeichnet, dass die vierte Biegekante perforiert ausgebildet ist. Diese Perforation erleichtert das Verbiegen an der vierten Biegekante.

Ein weiteres bevorzugtes Ausführungsbeispiel des Randprofils ist dadurch gekennzeichnet, dass zwischen der Basis und dem zweiten Schenkel eine fünfte Biegekante ausgebildet ist. Die fünfte Biegekante muss nicht perforiert ausgebildet sein. Es ist jedoch theoretisch möglich, die fünfte Biegekante mit einer Perforation zu versehen.

Besonders vorteilhaft kann das erfindungsgemäße Randprofil bei Schaltschranktüren eingesetzt werden. Die Schaltschranktür weist zum Beispiel eine rechteckförmige Türflügelfläche auf, die an allen Seiten mit dem erfindungsgemäßen Randprofil ausgestattet sein kann. Die vier Aufnahmekörper können dann mit einer einzigen Dichtung oder jeweils mit einer separaten Dichtung ausgestattet sein. Die Dichtung beziehungsweise die Dichtungen verhindern, dass Feuchtigkeit von außen in den mit der erfindungsgemäßen Schaltschranktür verschlossenen Schaltschrank gelangen kann.

Die oben angegebene Aufgabe ist bei einem Verfahren zum Herstellen eines Bauteils mit einem Randprofil, insbesondere einem vorher beschriebenen Randprofil, durch die folgenden Schritte gelöst. Zunächst wird ein Stück Blech gegebenenfalls noch zurechtgeschnitten. Daraufhin werden an den Ecken Ausklinkungen vorgenommen, die ein späteres Abkanten der Randprofile ermöglichen. Dann wird mindestens eine Biegekante, und zwar insbesondere die Biegekante zwischen dem Randprofil und dem Aufnahmekörper für die Dichtung, mit einer Perforation versehen. Dabei bedeutet Perforation, dass entlang der Biegekante kleine Durchbrüche angebracht werden, die vorzugsweise gleichmäßig voneinander beabstandet sind. Das Beschneiden des Blechs, das Anbringen der Ausklinkungen in den Ecken und das Perforieren können theoretisch auch in einem einzigen Arbeitsgang durchgeführt werden. Das so vorbereitete Blech wird dann in einem ersten Schritt abgekantet, um das Randprofil und den Aufnahmekörper zumindest teilweise zu erzeugen. In einem zweiten Schritt wird dann das Randprofil und der Aufnahmekörper entlang der Perforationslinie gebogen. Durch die Perforation wird gewährleistet, dass das Verbiegen entweder von Hand oder mittels einfacher pneumatischer Einrichtungen durchgeführt werden kann.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: einen Querschnitt durch ein erfindungsgemäßes Randprofil nach dem Abkanten;
- Figur 2: das Randprofil aus Figur 1 nach dem abschließenden Verbiegen entlang der Perforationslinien;
- Figur 3: das Randprofil aus Figur 2 mit eingesetzter Dichtung und
- Figur 4: ein zum Abkanten und Verbiegen vorbereitetes Blech.

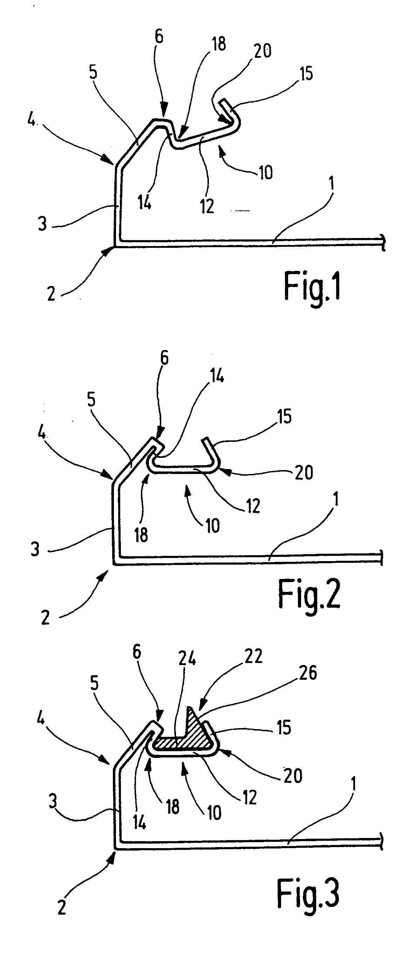

Das in Figur 1 im Querschnitt dargestellte Randprofil geht von einer ebenen Grundfläche 1 aus. Die ebene Grundfläche 1 ist über eine erste Biegekante 2 einstückig mit einem ersten länglichen Rahmenteil 3 verbunden. Zwischen der Grundfläche 1 und dem ersten länglichen Rahmenteil 3 ist ein Winkel von etwa 90° eingeschlossen. Das erste längliche Rahmenteil 3 hat die Form eines rechteckförmigen Streifens, dessen eine Längsseite von der ersten Biegekante 2 begrenzt wird. Die andere Längsseite des ersten länglichen Rahmenteils 3 wird von einer zweiten Biegekante 4 begrenzt.

Das erste längliche Rahmenteil 3 ist über die zweite Biegekante 4 einstückig mit einem zweiten länglichen Rahmenteil 5 verbunden. Das zweite längliche Rahmenteil 5 hat ebenfalls die Form eines länglichen, reckteckförmigen Streifens, dessen eine Längsseite von der zweiten Biegekante 4 begrenzt wird. Der Winkel, der zwischen dem ersten länglichen Rahmenteil 3 und dem zweiten länglichen Rahmenteil 5 eingeschlossen ist, beträgt etwa 140°. Die zweite Längsseite des zweiten länglichen Rahmenteils 5 wird von einer dritten Biegekante 6 begrenzt. Die dritte Biegekante 6 ist perforiert ausgebildet.

Das zweite längliche Rahmenteil 5 ist über die dritte, perforierte Biegekante 6 einstückig mit einem Aufnahmekörper 10 für eine (in Figur 1 nicht dargestellte) Dichtung verbunden. Der Aufnahmekörper 10 umfasst eine Basis 12, die von einem länglichen, rechteckförmigen Blechstreifen gebildet wird. Von den Längsseiten der Basis 12 gehen ein erster Schenkel 14 und ein zweiter Schenkel 15 aus, die jeweils die Form eines länglichen, reckteckförmigen Blechstreifens aufweisen. Die beiden Schenkel 14 und 15 dienen dazu, die (in Figur 1 nicht dargestellte) Dichtung zu umgreifen. Der erste Schenkel 14 ist an einer seiner Längsseiten über eine vierte Biegekante 18 einstückig mit der Basis 12 verbunden. Die vierte Biegekante 18 ist perforiert ausgebildet. Der zweite Schenkel 15 ist an einer seiner Längsseiten über eine fünfte Biegekante 20 einstückig mit der Basis 12 verbunden.

In Figur 1 sieht man, dass zwischen dem zweiten länglichen Rahmenteil 5 und dem ersten Schenkel 14 des Aufnahmekörpers 10 ein Winkel von etwa 50° eingeschlossen ist. Außerdem beträgt der Winkel zwischen dem ersten Schenkel 14 und der Basis 12 des Aufnahmekörpers 10 fast 90°. In Figur 1 ist das Randprofil unmittelbar nach dem Abkanten dargestellt. Die in Figur 1 dargestellten Biegewinkel können also allein durch Abkanten erzeugt werden.

In Figur 2 ist das Randprofil aus Figur 1 dargestellt, nachdem es entlang der Perforationslinien weiter verbogen wurde. Das abschließende Verbiegen kann entweder mit der Hand oder mit Hilfe einfacher Pneumatikeinrichtungen durchgeführt werden. In Figur 2 sieht man, dass der Aufnahmekörper 10 weiter um die perforierte, dritte Biegekante 6 herum verbogen wurde. Der Winkel zwischen dem zweiten länglichen Rahmenteil 5 und dem ersten Schenkel 14 des Aufnahmekörpers 10 beträgt etwa 0°, so dass der erste Schenkel 14 des Aufnahmekörpers 10 an dem zweiten länglichen Rahmenteil 5 zur Anlage kommen kann. Außerdem beträgt der zwischen dem ersten Schenkel 14 und der Basis 12 des Aufnahmekörpers 10 eingeschlossene Winkel etwa 60°. Der Winkel zwischen dem ersten Schenkel 14 der Basis 12 des Aufnahmekörpers 10 ist genau so groß wie der Winkel, der zwischen dem zweiten Schenkel 15 und der Basis 12 des Aufnahmekörpers 10 eingeschlossen ist.

In Figur 3 sieht man, dass der Aufnahmekörper 10 zwischen den Schenkeln 14 und 15 einen Aufnahmeraum bildet, in dem eine längliche Dichtung 22 aufgenommen ist. Die längliche Dichtung 22 weist einen länglichen Grundkörper 24 auf. Der Grundkörper 24 hat einen im Wesentlichen rechteckförmigen Querschnitt, dessen kurze Seiten schräg ausgebildet sind. Die Abschrägungen der kurzen Seiten des Grundkörpers 24 der Dichtung 22 sind an die Neigung der Schenkel 14 und 15 des Aufnahmekörpers 10 angepasst. Von dem länglichen Grundkörper 24 geht eine längliche Dichtlippe 26 mit einem dreieckförmigen Querschnitt aus. Das sich verjüngende Ende der Dichtlippe 26 ragt aus dem von dem Grundkörper 10 gebildeten Aufnahmeraum hinaus.

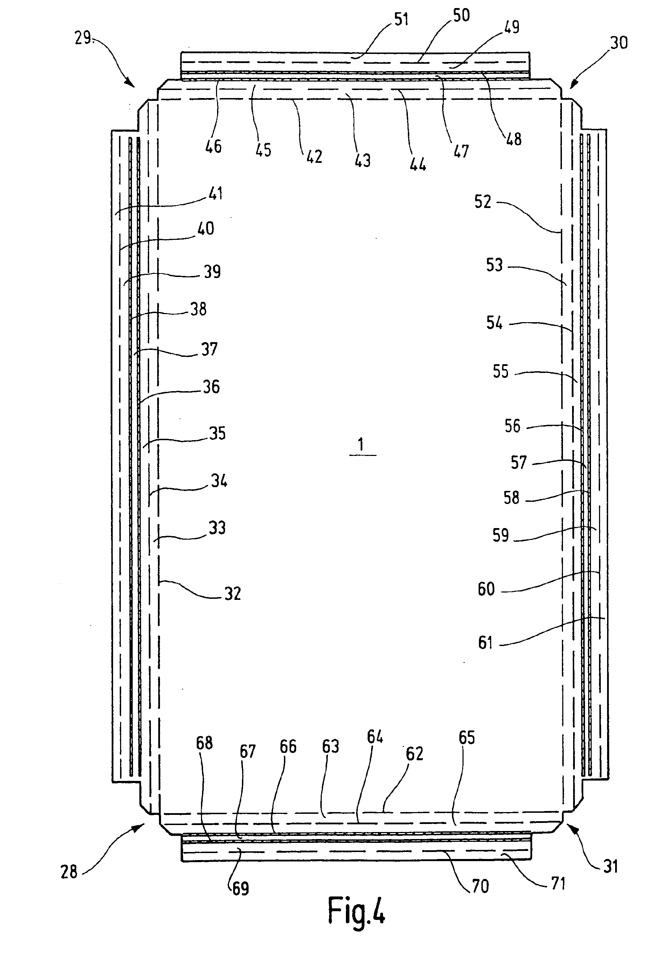

In Figur 4 ist ein Blech in der Draufsicht dargestellt, das zur Herstellung einer Schaltschranktür vorbereitet ist. Das Blech hat im Wesentlichen die Form eines Rechtecks mit einer ebenen Grundfläche 1, die an den Ecken 28, 29, 30 und 31 mit Ausklinkungen versehen ist. Die Ausklinkungen ermöglichen ein Abkanten der Randbereiche des Blechs.

Die reckteckige Grundfläche 1 wird an den vier Seiten von ersten Biegekanten 32, 42, 52 und 62 begrenzt. An die ersten Biegekanten 32, 42, 52 und 62 schließt sich jeweils ein länglicher, rechteckförmiger Streifen 33, 43, 53 und 63 an. Der längliche Streifen bildet ein erstes, längliches Rahmenteil, das im fertigen Zustand des Randprofils um 90° zu der ebenen Grundfläche 1 abgekantet ist. Der längliche, reckeckförmige Streifen wird nach außen hin von einer zweiten Biegekante 34, 44, 54, und 64 begrenzt, die ebenso wie die erste Biegekante 32 durch eine gestrichelte Linie angedeutet ist.

An die zweite Biegekante schließt sich nach außen hin ein zweiter länglicher, rechteckförmiger Streifen 35, 45, 55 und 65 an, der das zweite längliche Rahmenteil bildet. Das zweite längliche Rahmenteil wird nach außen hin von einer Perforationslinie 36, 46, 56, und 66 begrenzt, die eine Vielzahl von gleichmäßig beabstandeten Durchbrüchen aufweist. Durch diese Durchbrüche wird das Blechmaterial im Bereich der Perforationslinie 36, 46, 56 und 66 so geschwächt, dass es relativ leicht mit der Hand oder mit Hilfe einfacher Pneumatikeinrichtungen verbogen werden kann. Die Perforationslinie 36 bildet somit die dritte Biegekante des in Figur 4 dargestellten Blechs. Auf die dritte Biegekante folgt, von innen nach außen betrachtet, ein erster Schenkel 37, 47, 57 und 67 eines Aufnahmekörpers für die (in Figur 4 nicht dargestellte) Dichtung. Der zweite Schenkel des Aufnahmekörpers hat wiederum die Form eines länglichen Recktecks, das an einer Längsseite von der dritten Biegekante 36, 46, 56 und 66 begrenzt wird. An seiner anderen Längsseite wird der erste Schenkel von einer zweiten Perforationslinie 38, 48, 58 und 68 begrenzt, welche die vierte Biegekante bildet. Auf die vierte Biegekante folgt ein längliches, reckteckförmiges Basisteil 39, das an seiner nach außen gewandten Längsseite von einer fünften Biegekante 40, 50, 60 und 70 begrenzt wird. An die fünfte Biegekante schließt sich der zweite Schenkel 41, 51, 61 und 71 des Aufnahmekörpers an.

Zur Herstellung der Randprofile werden, wie in Figur 1 angedeutet ist, die beiden länglichen Rahmenteile 3 und 5 und der Aufnahmekörper 10 von der ebenen Grundfläche 1 abgekantet. Anschließend werden, wie in Figur 2 angedeutet, der zweite Schenkel 14 des Aufnahmekörpers 10 gegenüber dem zweiten Rahmenteil 5 und die Basis 12 des Aufnahmekörpers 10 gegenüber dem ersten Schenkel 14 weiter verbogen. Wenn die in Figur 2 dargestellte Endstellung erreicht ist, kann, wie in Figur 3 angedeutet ist, die Dichtung 22 in den von dem Aufnahmekörper 10 gebildeten Aufnahmeraum eingesetzt werden. Das Einsetzen der Dichtung 22 kann vor oder nach dem Abkanten beziehungsweise endgültigen Verbiegen der jeweiligen Profilabschnitte zueinander erfolgen.

## Patentansprüche

1. Randprofil eines Bauteils, insbesondere einer Tür für einen Schaltschrank, aus einem biegsamen Werkstoff, insbesondere aus Blech, mit einem länglichen Aufnahmeraum, der von einem länglichen Aufnahmekörper (10) gebildet wird und dazu dient, eine längliche Dichtung (22) so aufzunehmen, dass ein Teil der Dichtung in Form einer Dichtlippe (26) aus dem Aufnahmeraum herausragt, **dadurch gekennzeichnet, dass** der Aufnahmekörper (10) einstückig mit dem Bauteil ausgebildet ist.

2. Randprofil nach Anspruch 1, **dadurch gekennzeichnet, dass** das Randprofil von einer Grundfläche (1), insbesondere von einer Türflügelfläche ausgeht, die über mehrere Biegekanten (2,4,6,18,20) mit dem Aufnahmekörper (10) für die Dichtung (22) verbunden ist.

3. Randprofil nach Anspruch 2, **dadurch gekennzeichnet, dass** das Randprofil ausgehend von der Grundfläche (1) eine erste Biegekante (2) aufweist, von der ein erstes längliches Rahmenteil (3) ausgeht, das im Wesentlichen rechtwinklig zu der Grundfläche (1) angeordnet ist.

4. Randprofil nach Anspruch 3, **dadurch gekennzeichnet, dass** an dem ersten länglichen Rahmen (3) eine zweite Biegekante ausgebildet ist, von der ein zweites längliches Rahmenteil (5) ausgeht, das zu der Grundfläche (1) hin gebogen ist.

5. Randprofil nach Anspruch 4, **dadurch gekennzeichnet, dass** der Winkel zwischen dem ersten (3) und dem zweiten (5) länglichen Rahmenteil mehr als 90° beträgt.

6. Randprofil nach Anspruch 4 oder 5, **dadurch gekennzeichnet, dass** das zweite längliche Rahmenteil (5) über eine dritte Biegekante (6) mit dem Aufnahmekörper (10) verbunden ist.

7. Randprofil nach Anspruch 6, **dadurch gekennzeichnet, dass** die dritte Biegekante (6) zwischen dem zweiten länglichen Rahmenteil (5) und dem Aufnahmekörper (10) für die Dichtung (22) perforiert ausgebildet ist.

8. Randprofil nach einem der Ansprüche 4 bis 7, **dadurch gekennzeichnet, dass** der Aufnahmekörper (10) im Querschnitt betrachtet, eine Basis (12) aufweist, von der ein erster (14) und ein zweiter (15) Schenkel ausgehen, zwischen denen die Dichtung (22) angeordnet, insbesondere eingeklemmt ist.

9. Randprofil nach Anspruch 8, **dadurch gekennzeichnet, dass** die beiden Schenkel (14,15) zueinander geneigt angeordnet sind, und dass zwischen den Schenkeln (14,15) und der Basis (12) jeweils ein Winkel von weniger als 90°, insbesondere im Wesentlichen 45°, eingeschlossen ist.

10. Randprofil nach Anspruch 8 oder 9, **dadurch gekennzeichnet, dass** der erste Schenkel (14) des Aufnahmekörpers über die dritte Biegekante (6) mit dem zweiten länglichen Rahmenteil (5) verbunden ist, und dass der dazwischen eingeschlossene Winkel etwa 0° beträgt.

11. Randprofil nach einem der Ansprüche 8 bis 10, **dadurch gekennzeichnet, dass** zwischen dem ersten Schenkel (14) und der Basis (12) eine vierte Biegekante (18) ausgebildet ist.

12. Randprofil nach Anspruch 11, **dadurch gekennzeichnet, dass** die vierte Biegekante (18) perforiert ausgebildet ist.

13. Randprofil nach einem der Ansprüche 11 oder 12, **dadurch gekennzeichnet, dass** zwischen der Basis (12) und dem zweiten Schenkel (15) eine fünfte Biegekante (20) ausgebildet ist.

14. Schaltschranktür mit mindestens einem Randprofil nach einem der vorhergehenden Ansprüche.

15. Schaltschranktür mit einem Randprofil nach einem der vorhergehenden Ansprüche an jeder Seite.

16. Verfahren zum Herstellen eines Bauteils mit einem Randprofil, insbesondere einem Randprofil nach einem der Ansprüche 1 bis 14, **gekennzeichnet durch** die folgenden Schritte:
a) mindestens eine Biegekante wird mit einer Perforation versehen,
b) das Randprofil wird in einem ersten Schritt teilweise abgekantet,
c) das Randprofil wird in einem zweiten Schritt entlang der Perforationslinie verbogen.
